# EUROPEAN PATENT APPLICATION

(11) **EP 2 093 472 A2**
(43) Date of publication of application: **26.08.2009**
(21) Application number: 08161780.5
(22) Date of filing: 05.08.2008
(51) Int. Cl.: F16M 11/10

(54) **Display Set**

(30) Priority: 21.02.2008 TW 97203033 U
(71) Applicant: AdvanPOS Technology Co., Ltd., Taipei 231 (TW)
(72) Inventor: Wu, Hsieh-Fa, 231, Taipei County (TW)
(74) Representative: Lang, Christian

(57) **Abstract**

A display set includes a support unit (1), a first connector (13), a display (2) and a second connector (22). The support unit (1) includes a base (11), a back support (12) connected to the base (11) and two connective portions (13,14) formed on the back support (12). The first connector (13) is attached to the back support (12). The display (2) includes a back plate (20) and two connective portions (23) for engagement with the connective portions (13,14) of the support unit (1). The second connector (22) is attached to the back plate (20) for engagement with the first connector (13).

## Description

### BACKGROUND OF INVENTION

### 1. FIELD OF INVENTION

The present invention relates to a display set and, more particularly, to a display set including a display and a support unit so that the display can firmly be supported on the support unit and that the display can easily be detached from the support unit for maintenance.

### 2. RELATED PRIOR ART

An ordinary display set includes a display and a support unit pivotally connected to the display. A connector is provided on the back of the display. The connector is connected to a host through a cable and a convertor. Thus, a user can view data on the display. If the display is a touch panel, the display can be operated for the input of data to the host.

However, the cable is exposed to the user's view. The cable may look massy and cause troubles in the installment of the display set. Moreover, for the maintenance or repair of the display, the display and the support unit have to be transported together to a service center or repair shop, and this is troublesome and expensive. When the display is out of order, the display and the support unit have to be replaced with a new display and a new support unit together, and this is expensive.

The present invention is intended to obviate or at least alleviate the problems encountered in prior art.

### SUMMARY OF INVENTION

It is the primary objective of the present invention to provide a display set including a display and a support unit so that the display can firmly be supported on the support unit and that the display can easily be detached from the support unit for maintenance, repair or displacement.

According to the present invention, a display set includes a support unit, a first connector, a display and a second connector. The support unit includes a base, a back support connected to the base and two connective portions formed on the back support. The first connector is attached to the back support. The display includes a back plate and two connective portions for engagement with the connective portions of the support unit. The second connector is attached to the back plate for engagement with the first connector.

Other objectives, advantages and features of the present invention will become apparent from the following description referring to the attached drawings.

### BRIEF DESCRIPTION OF DRAWINGS

The present invention will be described via the detailed illustration of two embodiments referring to the drawings.

Fig. 1 is a perspective view of a display set according to the first embodiment of the present invention.

Fig. 2 is an exploded view of the display set shown in Fig. 1.

Fig. 3 is another exploded view of the display set shown in Fig. 1.

Fig. 4 is an enlarged view of the display set shown in Fig. 3.

Fig. 5 is a perspective view of the display set shown in Fig. 4.

Fig. 6 is an exploded view of a display set according to the second embodiment of the present invention.

### DETAILED DESCRIPTION OF EMBODIMENTS

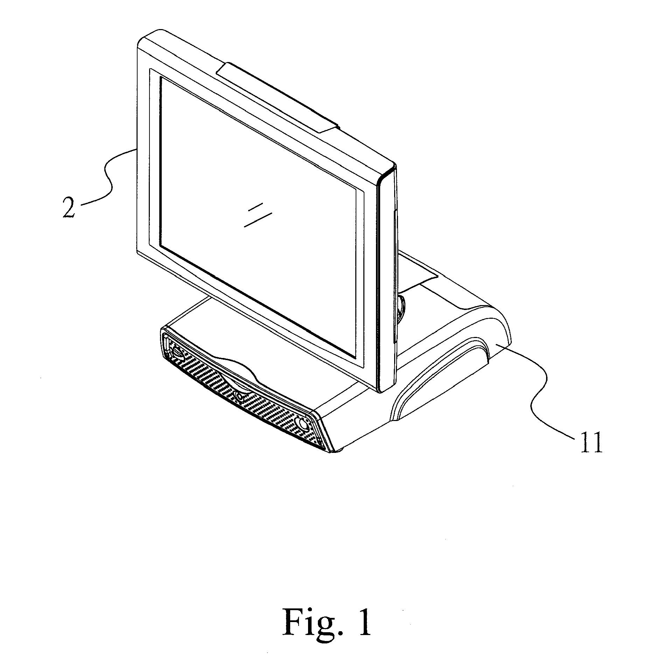

Referring to Figs. 1 to 5, there is shown a display set according to a first embodiment of the present invention. The display set includes a support unit 1 and a display 2 so that the display 2 can firmly be supported on the support unit 1 and that the display 2 can easily be detached from the support unit 1 for maintenance, repair or displacement.

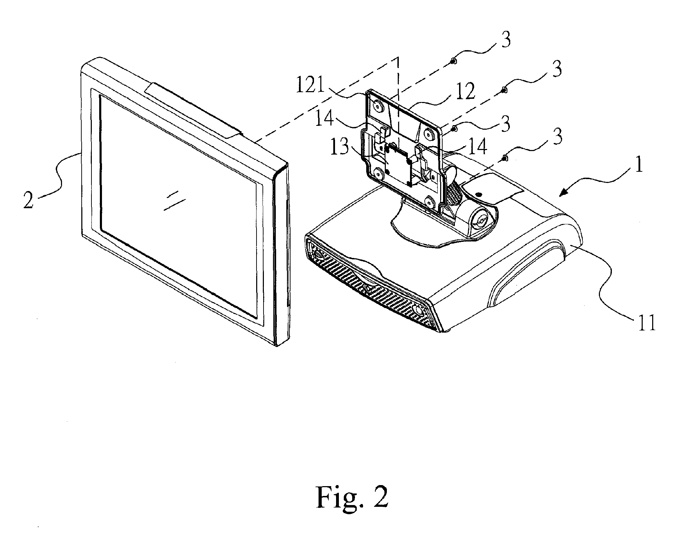

Referring to Fig. 2, the support unit 1 includes a base 11 and a back support 12 pivotally connected to the base 11. The back support 12 is in the form of a rectangular plate. The back support 12 includes apertures 121 defined therein. The apertures 121 may be countersink holes. A connector 13 is attached to the back support 12. Two connective portions 14 are formed on the back support 12. The connector 13 is located between the connective portions 14. The connective portions 14 are in the form of a hook.

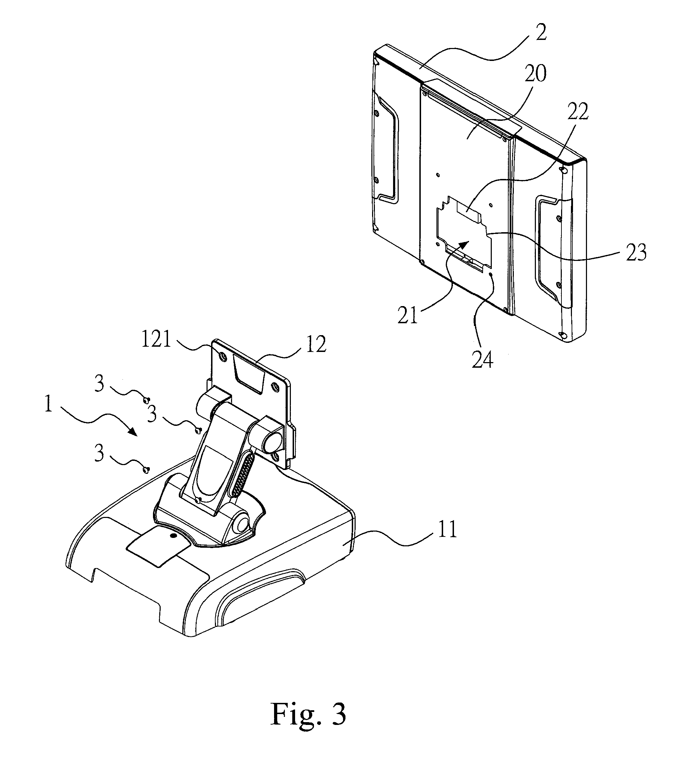

Referring to Fig. 3, the display 2 includes a back plate 20 that includes an opening 21 defined therein, two connective portions 23 formed at two corners of the opening 21 and screw holes 24. The opening 21 is rectangular. The connective portions 23 are in the form of a tab. The display 2 may be a touch panel or include keys or buttons so that it is operable for the input of data into a host connected to the display 2.

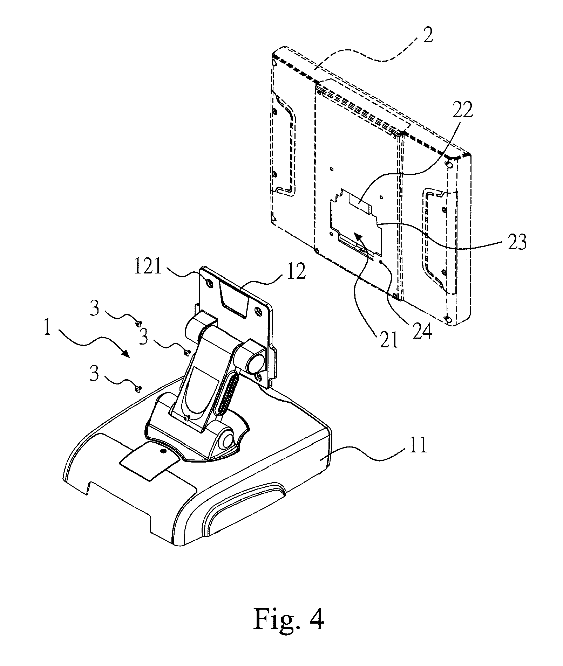

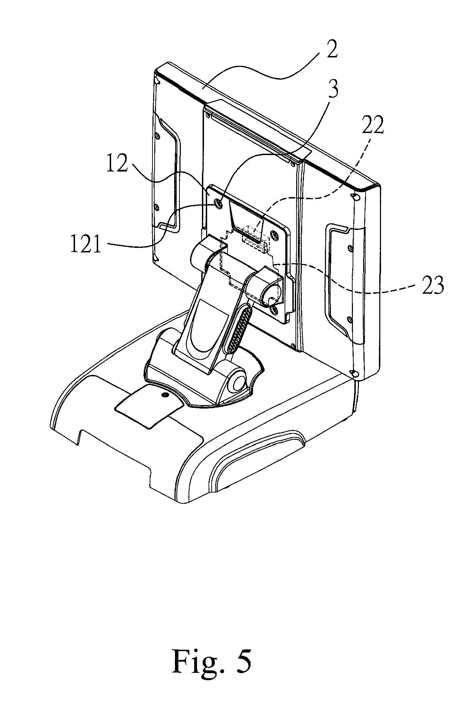

Referring to Figs. 4 and 5, the back support 12 is inserted through the opening 21. Then, the back plate 20 is lowered onto the back support 12 so that the connective portions 23 of the back plate 20 are engaged with the connective portions 14 of the back support 12. That is, the tabs 23 are hooked on the hooks 14. The connector 22 is engaged with the connector 13 simultaneously. The engagement of the connector 22 with the connector 13 may be the contact between pads or the insertion of a plug or card into a socket or slot. Threaded bolts 3 are driven into the screw holes 24 through the apertures 121. It requires a screwdriver to drive the threaded bolts 3.

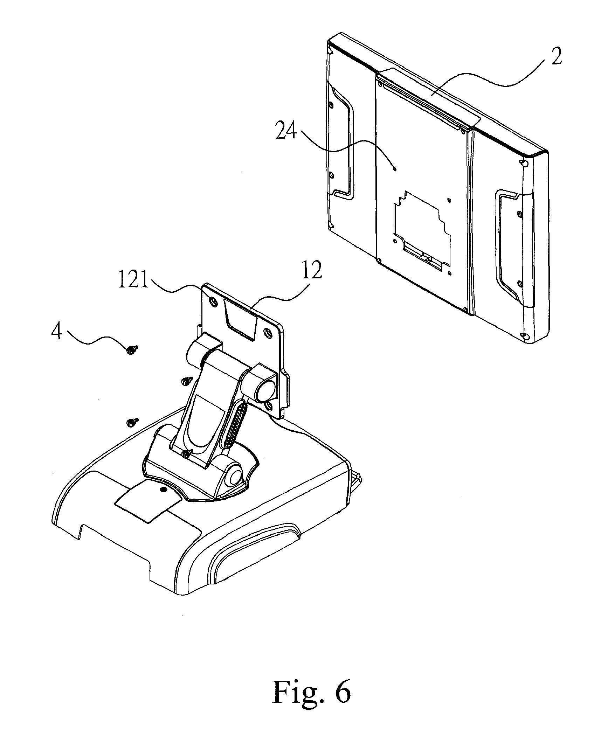

Referring to Fig. 6, there is shown a display set according to a second embodiment of the present invention. The second embodiment is like the first embodiment except including threaded bolts 4 instead of the threaded bolts 3. Each of the threaded bolts 4 is formed with a knob operable by bare hands.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A display set comprising:
a support unit comprising a base, a back support connected to the base and two connective portions formed on the back support;
a first connector attached to the back support;
a display comprising a back plate and two connective portions for engagement with the connective portions of the support unit; and
a second connector attached to the back plate for engagement with the first connector.

2. The display set according to claim 1 comprising threaded bolts for attaching the back support to the back plate.

3. The display set according to claim 1, wherein each of the threaded bolts comprises a knob operable for driving the threaded bolt.

4. The display set according to claim 2, wherein the back support comprises apertures defined therein, and the back plate comprises screw holes defined therein so that the threaded bolts can be driven in the threaded holes through the apertures.

5. The display set according to claim 1, wherein the engagement of the first connector with the second connector is in the form of the contact between pads.

6. The display set according to claim 1, wherein the engagement of the first connector with the second connector is in the form of inserting a plug into a socket.

7. The display set according to claim 1, wherein the engagement of the first connector with the second connector is in the form of inserting a card into a slot.

8. The display set according to claim 1, wherein the connective portions of one of the back plate and the back support are hooks while the connective portions of the other one of the back plate and the back support are tabs.

9. The display set according to claim 1, wherein the back plate comprises an opening through which the back support is inserted.

10. The display set according to claim 1, wherein the display is a touch panel operable for the input of data to a host connected to the display.

11. The display set according to claim 1, wherein the display comprises keys operable for the input of data to a host connected to the display.
